# FASCICULE DE BREVET EUROPEEN

(11) **EP 3 927 973 B1**
(45) Date de publication et mention de la délivrance du brevet: **04.01.2023**
(21) Numéro de dépôt: 20701354.1
(22) Date de dépôt: 28.01.2020
(51) Int. Cl.: F04B 49/06, F04B 17/03, F04C 14/08, F04C 14/28, F16H 57/04, F16N 13/06

(54) **PROCÉDÉ DE CONTRÔLE DU DÉMARRAGE D'UNE POMPE À HUILE**
VERFAHREN ZUR STEUERUNG DES STARTS EINER ÖLPUMPE
METHOD FOR CONTROLLING THE STARTING OF AN OIL PUMP

(30) Priorité: 21.02.2019 FR 1901738
(43) Date de publication de la demande: 29.12.2021
(73) Titulaire: Renault s.a.s, 92100 Boulogne Billancourt (FR)
(72) Inventeur: LELEU, Mathieu, 78112 Fourqueux (FR)
(74) Mandataire: Renault Group
(86) Numéro de dépôt international: PCT/EP2020/051980
(87) Numéro de publication internationale: WO 2020/169308

(56) Documents cités:
- WO-A1-2018/016276
- US-B2- 8 814 534
- US-B2- 9 618 154

## Description

La présente invention se rapporte au contrôle du démarrage des pompes à huile, notamment des pompes à huile à moteur sans balais, ou « brushless », et sans capteur de mesure de position, ou « *sensorless* »*.*

Plus précisément, elle a pour objet un procédé de contrôle du démarrage d'une pompe à huile de boîte de vitesses par un moteur électrique sans balais ni capteur de position, dans lequel on alimente les bobines de stator à partir de l'arrêt, selon une séquence de pilotage en boucle ouverte à courant constant jusqu'à ce que la pompe atteigne un seuil de vitesse où le calculateur bascule vers un pilotage en boucle fermée sur une consigne de régime correspondant au débit de lubrification nécessaire pour assurer la fiabilité de la boîte de vitesses sans pour autant dépasser un seuil de diagnostic, qui détecte le blocage de la pompe, et où le pilotage du moteur rebascule sur la séquence de pilotage en boucle ouverte à courant constant.

La lubrification des boîtes de vitesses peut s'effectuer, soit par projection de l'huile dans la boîte et par aspersion gravitaire des éléments à lubrifier, soit avec l'aide d'une pompe de mise en circulation d'huile, le plus souvent électrique. Le démarrage de la pompe est requis dans toutes les conditions d'utilisation, notamment à basse température. Dans une pompe, un moteur « *brushless* », présente plusieurs avantages par rapport au moteur à balais, notamment par son rapport couple/encombrement plus élevé, sa meilleure dynamique, et son bruit de fonctionnement plus faible.

Par ailleurs, la fiabilité du moteur « *brushless* » est plus élevée que celle du moteur à balais, grâce au remplacement du commutateur métallique par un commutateur électronique. Ce dernier nécessite néanmoins une alimentation séquentielle des bobines du stator, qui demande de connaître la position du rotor par rapport au stator. Pour cela, on peut utiliser des capteurs de position, à effet Hall, ou des solutions sans capteur, comme la mesure de la force contre-électromotrice des bobinages non actifs, appelée tension *« back EMF* ». Compte tenu de l'environnement pollué, ainsi que des objectifs élevés de fiabilité et de maîtrise des coûts, la solution sans capteur « *sensorless* » est préférable. Toutefois, comme la tension *back-EMF* est proportionnelle à la vitesse de rotation du rotor, la tension mesurée est nulle quand le rotor est à l'arrêt. De plus, la détection de phase est sensible à la température. Enfin le signal *back-EMF est accompagné de « bruits »* à faible régime. Dans ces conditions, une amplitude minimale est nécessaire, pour détecter la forme du signal. Pratiquement, on considère que la mesure du signal *back-EMF,* n'est exploitable que si la vitesse du rotor est supérieure à 500 tr/min.

Pour démarrer le moteur « *brushless* » de la pompe, de zéro à 500 tr/min, on peut alimenter les bobines selon une séquence prédéterminée (algorithme) à courant constant, en boucle ouverte (BO). Au-delà d'un seuil de vitesse, par exemple de 500 tr/min, le contrôleur de la pompe peut basculer dans un mode de pilotage en boucle fermée (BF), où le courant de phase est régulé par un régulateur de type PID (pour *Proportionnel Intégral Dérivé*) sur une consigne de vitesse de rotation correspondant au débit de lubrification nécessaire pour assurer la fiabilité de la boîte de vitesses.

La pompe à huile possède généralement un système de surveillance du courant de phase, pour détecter son éventuel blocage, et en réaliser le diagnostic. Si le rotor se bloque (rupture, particule métallique dans le mécanisme de la pompe), le régulateur PID sait détecter l'écart de boucle de vitesse. Il augmente alors le courant, pour augmenter le couple du moteur de la pompe, et chercher à l'accélérer. Si ce courant dépasse un seuil, la pompe envoie un message au contrôleur du groupe moto propulseur, pour l'alerter d'une défaillance.

La plage de température d'huile d'une boîte de vitesses, varie en principe de -40°C à 150°C. La viscosité de l'huile varie de manière très significative à l'intérieur de cette plage. Le couple résistant à la pompe est proportionnel à la viscosité de l'huile, donc à sa température. Dans la pratique, la plage de variation de la température et du couple résistant au rotor, est telle, qu'une calibration unique des paramètres du PID n'est pas réalisable assurer en toutes circonstances un passage de boucle ouverte à boucle fermée sans dépasser le seuil de courant de diagnostic. Ainsi, si le régulateur de courant PID est calibré pour assurer un bon démarrage à chaud, ce même régulateur PID entrainera un dépassement de seuil de courant à froid, et réciproquement.

Pour que la pompe fonctionne de manière satisfaisante, les paramètres du régulateur de courant doivent pouvoir être adaptés aux conditions de température. Une première solution pour résoudre ce problème, est d'insérer dans le circuit de lubrification, un capteur de température d'huile. Ce capteur est relié, soit au calculateur du GMP (*Groupe Moto Propulseur*), soit au calculateur de la pompe, de manière à pouvoir ajuster les paramètres du régulateur de courant PID en fonction de la température.

La publication US 8,814,534, décrit une pompe à huile de transmission commandée par un moteur électrique, comprenant un capteur de température d'huile, et un contrôleur régulant le courant du moteur électrique et le couple fourni par la pompe en fonction de la température. Lorsqu'il détecte un écart de température entre la température indiquée par le capteur de température, et la température régnant à proximité de la pompe, le contrôleur est configuré pour abaisser au démarrage, la vitesse de rotation du moteur. Il abaisse cette vitesse par rapport à la consigne sur laquelle le moteur devrait délivrer le couple correspondant à la température d'huile détectée par le capteur. La présente invention vise à adapter les paramètres de fonctionnement d'un régulateur de courant de moteur de pompe de lubrification en fonction de la viscosité de l'huile, sans recourir à un capteur de température d'huile.

Dans ce but, la consigne de courant en boucle ouverte est supérieure au seuil de basculement en boucle fermée, de manière à disposer en boucle ouverte d'un couple moteur sur la pompe plus élevé qu'en boucle fermée.

La présente invention sera mieux comprise à la lecture de la description suivante d'un mode de réalisation non limitatif de celle-ci, en se reportant aux dessins annexés, sur lesquels :
[Fig. 1] est un schéma de contrôle simplifié.
[Fig. 2] illustre le moteur sans balais.
[Fig. 3] reproduit le profil type des signaux analysés.
[Fig. 4] montre l'évolution de la température d'huile.

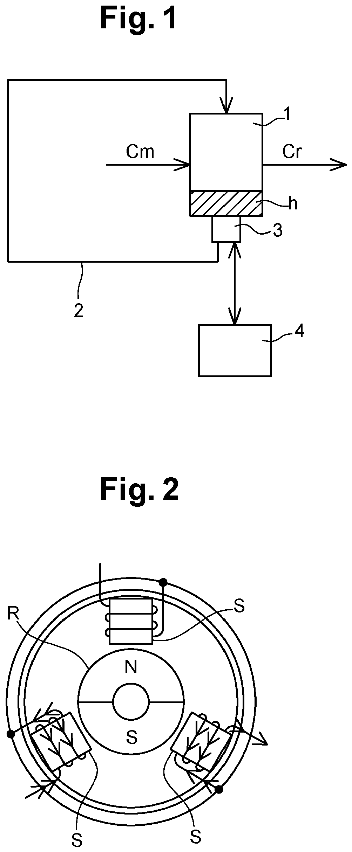

Sur la figure 1, on a représenté schématiquement une boîte de vitesses 1 transmettant le couple Cₘ d'un moteur en direction des roues (couple aux roues Cᵣ), sur différents rapports de transmission. La pompe à l'huile 3, placée sous le fond de la boîte renfermant l'huile de lubrification h, alimente un circuit de lubrification extérieur 2, par lequel l'huile est réintroduite dans la partie supérieure de la boîte, pour assurer la lubrification des pièces. Dans cet exemple, la pompe dispose d'un moteur (non représenté) sans balais ni capteur de température), communiquant avec le contrôleur du groupe motopropulseur 4.

La figure 2 montre un schéma de moteur à trois stators bobinés S, dont les enroulements sont connectés à un commutateur électronique (non représenté). Lorsque deux des trois stators, sont alimentés électriquement, le rotor crée dans le troisième une Force Contre Electromotrice « *back-EMF ».* Un moteur sans balais ni capteur de courant, est piloté par un régulateur de courant, habituellement de type PID.

Dans une pompe de lubrification de boîte de vitesses, on sait calibrer le courant pour assurer un démarrage performant, par exemple à partir d'une température d'huile de boîte de 20°C. Le pilotage s'effectue soit en boucle ouverte (BO) selon des séquences déterminées à courant constant, soit en boucle fermée (BF) sur des consignes de courant variables en fonction de la vitesse, atteinte par le moteur et par la pompe. Pour démarrer la pompe à froid, la méthode habituelle est d'alimenter les bobines de rotor selon une première séquence déterminée à courant constant, qui part de l'arrêt du moteur et de la pompe (vitesse nulle) jusqu'à un seuil de vitesse préétabli du moteur. A partir de ce seuil, le moteur bascule dans un deuxième mode de pilotage, en boucle fermé, sur une consigne de régime de pompe. Cette consigne correspond au débit de lubrification nécessaire pour assurer la fiabilité de la boîte de vitesses.

Lorsqu'on contrôle le démarrage d'une pompe à huile de boîte de vitesses par un moteur électrique sans balais, ni capteur de position, il est avantageusement alimenté, à partir de l'arrêt, selon une séquence de pilotage en boucle ouverte par un calculateur. Dans cette première séquence, le pilotage s'effectue à courant constant, jusqu'à ce que la pompe atteigne un seuil de vitesse. La régulation bascule alors vers un pilotage en boucle fermée, sur une consigne de régime correspondant au débit de lubrification nécessaire pour assurer la fiabilité de la boîte de vitesses. Toutefois en boucle fermée, le courant ne peut pas pour autant dépasser un seuil de diagnostic, détectant le blocage de la pompe. Si ce seuil est atteint, le calculateur impose que le pilotage du moteur rebascule sur la séquence de pilotage en boucle ouverte à courant constant.

Le débit de lubrification est un paramètre de réglage du régulateur de courant, qui doit être ajusté en fonction du degré viscosité de l'huile, donc de sa température. Le problème sur lequel repose l'invention est d'ajuster le paramétrage du régulateur de courant, à la température de l'huile, sans disposer de capteur de température d'huile. Comme indiqué plus haut, le moteur dispose d'un système de surveillance de courant de phase. Ce système surveille le passage du courant par un seuil de diagnostic permettant de détecter que la pompe est bloquée. Dans la solution proposée, on choisit calibrer le courant de phase en boucle ouverte sur une valeur supérieure au seuil de diagnostic de courant de phase en boucle fermée, de manière à disposer d'un couple moteur sur la pompe, qui est plus élevé en boucle ouverte qu'en boucle fermée.

Lorsque la vitesse du véhicule est positive, le calculateur du groupe motopropulseur (GMP) envoie pour commencer une consigne de régime à la pompe, qui est supérieure au seuil de basculement entre la boucle ouverte et la boucle fermée. Le calculateur du GMP (ou le calculateur de la pompe à huile, selon l'architecture logicielle choisie) utilise l'information de dépassement du seuil de courant de diagnostic pour détecter que le rotor se bloque en phase de boucle fermée. Le calculateur compte le nombre de blocages. Lorsque le compteur dépasse un seuil n de nombre de blocages, il engage une phase d'oscillation du rotor (sinusoïde) appelée « *deblocking* ». Cette phase permet de retirer une éventuelle particule métallique coincée dans le mécanisme de la pompe.

En l'absence de particules métalliques dans l'huile, on considère que le blocage du rotor est dû à la viscosité de l'huile, qui est trop importante à basse température. La méthode proposée pour adapter les paramètres du régulateur à la température de l'huile, repose sur détection d'un blocage. Cet évènement est exploité pour envoyer au régulateur une consigne de vitesse, telle que la pompe fonctionne en boucle ouverte pendant une période calibrée. Conformément à l'invention, la calibration de courant en boucle ouverte est supérieure au seuil de diagnostic de courant en boucle fermée, de manière à disposer en boucle ouverte d'un couple moteur sur la pompe plus élevé qu'en boucle fermée. La pompe peut ainsi fonctionner à un régime moindre en boucle ouverte qu'en boule fermée mais assurer ainsi une lubrification minimale de la boîte de vitesses, à basse température. Pendant que la boîte de vitesses fonctionne à basse température, le cisaillement de l'huile par les pignons (barbotage) et la puissance motrice dissipée dans la boîte élève la température de l'huile. Chaque fois qu'un blocage de la pompe est détecté en boucle fermée, le calculateur du GMP bascule la pompe en boucle ouverte pendant une période calibrée. Après cette temporisation calibrée, le calculateur renvoie la consigne de vitesse initiale en boucle fermée.

Si la température de l'huile a suffisamment augmenté pour que cette consigne reste sous le seuil de détection de blocage en boucle fermée, la pompe peut alors atteindre sa consigne de régime. La pompe est effectivement démarrée.

Dans le cas contraire, la température d'huile est encore trop basse. Le couple résistant au rotor est supérieur au couple que le moteur est capable de fournir en boucle fermée. A l'issue de la temporisation calibrée, le calculateur du GMP pilote à nouveau le régime en boucle fermée. Le calculateur de la pompe cherche alors à augmenter le courant, et dépasse le seuil de diagnostic du courant sans atteindre sa consigne de régime. Le calculateur du GMP renvoie la consigne de pilotage en boucle ouverte à chaque dépassement du seuil de détection de blocage en boucle fermée. Cette alternance de périodes de pilotage en boucle ou verte et en boucle fermée, se poursuit jusqu'à ce que la température de l'huile augmente suffisamment pour permettre le démarrage de la pompe à huile en boucle fermée.

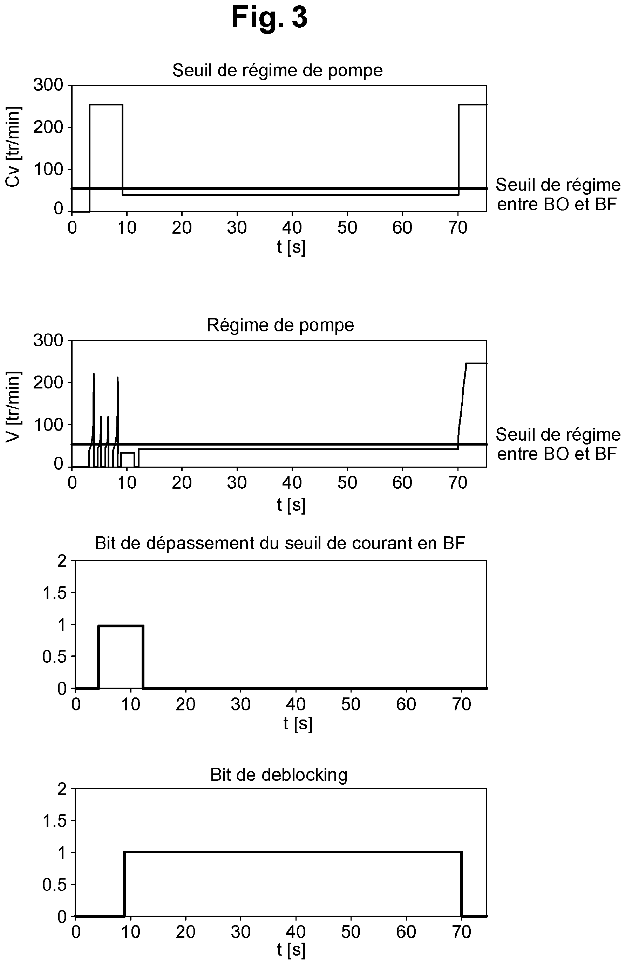

Sur la figure 3 on a superposé l'évolution dans le temps de plusieurs signaux :
- la consigne de régime Cᵥ de la pompe en tours par minute, sur deux niveaux par rapport au seuil de basculement de boucle ouverte en boucle fermée BO/BF,
- le régime de la pompe V en tours par minute pendant les phases de pilotage en boucle ouverte et en boucle fermée, jusqu'au démarrage effectif,
- les signaux (bit) de dépassement de courant de phase (détection de blocage),
- le signal d'application d'oscillation (bit de deblocking) du rotor.

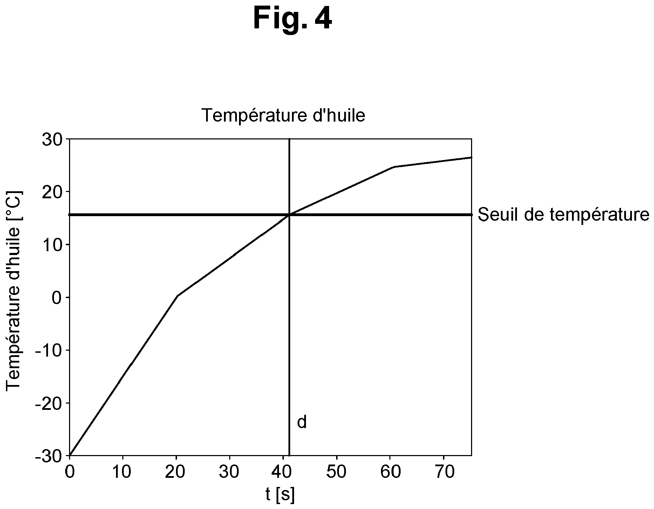

La figure 4 montre l'évolution de la température θ de l'huile en degrés par rapport au seuil s à partir duquel la pompe peut fonctionner avec un courant en boucle fermée inférieur au seuil de courant de diagnostic de blocage (huile suffisamment chaude). En résumé, le contrôle consiste à tester la viscosité de l'huile et sa température au travers du couple résistant au rotor de la pompe, car ce couple est l'image du courant de phase. La valeur du courant est exploitée comme un estimateur de la température de l'huile. Grâce à cette estimation, il n'est pas nécessaire de connaître la température de l'huile pour permettre à la pompe de démarrer. Le fait de fonctionner par essais, et par détection de blocages, permet d'assurer un démarrage autonome de la pompe, quelle que soit la température de l'huile.

La suppression capteur de température présente de nombreux avantages :
- réduction des coûts,
- augmentation de la fiabilité,
- facilitation de la mise au point, sans table de correspondance entre la température d'huile et les paramètres du régulateur PID,
- suppression d'une entrée sur le calculateur GMP ou sur la pompe à huile,
- simplification de l'architecture de boîte de vitesses et de son environnement sous capot.

Ce dernier avantage est très appréciable, notamment sur un GMP hybride, où l'implantation du capteur de température sur le carter, et le parcours de son câble électrique sont problématiques, en raison de l'encombrement du secteur concerné.

## Revendications

1. Procédé de contrôle du démarrage d'une pompe à huile (3) de boîte de vitesses (1) par un moteur électrique sans balais, ni capteur de position, dans lequel on alimente les bobines (S) de stator à partir de l'arrêt selon une séquence de pilotage en boucle ouverte à courant constant jusqu'à ce que la pompe (3) atteigne un seuil de vitesse où la régulation du régime bascule vers un pilotage en boucle fermée sur une consigne correspondant au débit de lubrification nécessaire pour assurer la fiabilité de la boîte de vitesses (1) sans pour autant dépasser un seuil de courant détectant le blocage de la pompe où le pilotage du moteur rebascule sur la séquence de pilotage en boucle ouverte à courant constant, **caractérisé en ce que** la consigne de courant en boucle ouverte est supérieure au seuil de basculement en boucle fermée, de manière à disposer en boucle ouverte d'un couple moteur sur la pompe plus élevé qu'en boucle fermée.

2. Procédé de contrôle de démarrage d'une pompe à huile (3) selon la revendication 1, **caractérisé en ce que**, lors d'une détection de blocage de la pompe en boucle fermée, le calculateur GMP bascule la régulation de régime de la pompe en boucle ouverte pendant une période calibrée.

3. Procédé de contrôle de démarrage d'une pompe à huile (3) selon la revendication 2, **caractérisé en ce que** la séquence de pilotage de la pompe en boucle ouverte, comporte une séquence d'oscillations du rotor (R).

4. Procédé de contrôle de démarrage d'une pompe à huile (3) selon la revendication, 2 ou 3, **caractérisé en ce que** à l'issue de la période calibrée, le calculateur du GMP envoie une consigne de régime à la pompe correspondant à un fonctionnement en boucle fermée.

5. Procédé de contrôle de démarrage d'une pompe à huile (3) selon la revendication 4, **caractérisé en ce que** le calculateur du GMP renvoie la consigne de pilotage en boucle ouverte, à chaque dépassement du seuil de détection de blocage en boucle fermée.

6. Procédé de contrôle de démarrage d'une pompe à huile (3) selon la revendication 4 ou 5, **caractérisé en ce que** le pilotage du courant reste en boucle fermée sur la consigne correspondant au débit de lubrification nécessaire pour assurer la fiabilité de la boîte de vitesses (1), si la température de l'huile a suffisamment augmenté pour que cette consigne sur reste sous le seuil de détection de blocage en boucle fermée.

## Patentansprüche

1. Verfahren zur Steuerung des Starts einer Ölpumpe (3) eines Getriebes (1) durch einen bürstenlosen Elektromotor ohne Positionssensor, wobei den Statorwicklungen (S) aus dem Stillstand gemäß einer Ansteuerungssequenz mit offenem Regelkreis ein konstanter Strom zugeführt wird, bis die Pumpe (3) eine Schwellendrehzahl erreicht, bei der die Drehzahlregelung umschaltet auf eine Ansteuerung mit geschlossenen Regelkreis mit einem Sollwert, der dem Schmierdurchsatz entspricht, der notwendig ist, um die Funktionsfähigkeit des Getriebes (1) zu gewährleisten, ohne jedoch einen Stromschwellenwert zu überschreiten, der die Blockade der Pumpe detektiert, in welchem Fall die Ansteuerung des Motors auf die Ansteuerungssequenz mit offenem Regelkreis und konstantem Strom zurückschaltet, **dadurch gekennzeichnet, dass** der Stromsollwert bei offenem Regelkreis größer ist als der Umschaltschwellenwert bei geschlossenem Regelkreis, um bei offenem Regelkreis über ein höheres Motordrehmoment für die Pumpe zu verfügen als bei geschlossenem Regelkreis.

2. Verfahren zur Steuerung des Starts einer Ölpumpe (3) nach Anspruch 1, **dadurch gekennzeichnet, dass** bei einer Detektion einer Blockade der Pumpe bei geschlossenem Regelkreis die Antriebsstrang-Recheneinheit die Drehzahlregelung der Pumpe während eines kalibrierten Zeitraums zu einem offenem Regelkreis umschaltet.

3. Verfahren zur Steuerung des Starts einer Ölpumpe (3) nach Anspruch 2, **dadurch gekennzeichnet, dass** die Ansteuerungssequenz der Pumpe bei offenem Regelkreis eine Oszillationssequenz des Rotors (R) umfasst.

4. Verfahren zur Steuerung des Starts einer Ölpumpe (3) nach Anspruch 2 oder 3, **dadurch gekennzeichnet, dass** die Antriebsstrang-Recheneinheit am Ende des kalibrierten Zeitraums einen Drehzahlsollwert an die Pumpe sendet, der einem Betrieb mit geschlossenem Regelkreis entspricht.

5. Verfahren zur Steuerung des Starts einer Ölpumpe (3) nach Anspruch 4, **dadurch gekennzeichnet, dass** die Antriebsstrang-Recheneinheit bei jeder Überschreitung des Blockadedetektionsschwellenwerts bei geschlossenem Regelkreis den Sollwert zur Ansteuerung mit offenem Regelkreis erneut sendet.

6. Verfahren zur Steuerung des Starts einer Ölpumpe (3) nach Anspruch 4 oder 5, **dadurch gekennzeichnet, dass** die Ansteuerung des Stroms bei einem geschlossenen Regelkreis mit dem Sollwert, der dem Schmierdurchsatz entspricht, der notwendig ist, um die Funktionsfähigkeit des Getriebes (1) zu gewährleisten, bleibt, wenn die Temperatur des Öls so weit angestiegen ist, dass dieser Sollwert bei geschlossenem Regelkreis unter dem Blockadedetektionsschwellenwert bleibt.

## Claims

1. Method for controlling the starting of a gearbox (1) oil pump (3) by a brushless electric motor, without position sensor, wherein the stator coils (S) are powered from the off mode according to a constant-current open-loop control sequence until the pump (3) reaches a speed threshold at which the speed regulation switches over to closed-loop control on a setpoint corresponding to the lubrication flow rate necessary to ensure the reliability of the gearbox (1), but without exceeding a current threshold detecting seizure of the pump at which the motor control switches back over to the constant-current open-loop control sequence, **characterized in that** the open-loop current setpoint is higher than the threshold for switching over to closed-loop mode, so as to have, in open-loop mode, a motor torque on the pump that is higher than in closed-loop mode.

2. Method for controlling the start-up of an oil pump (3) according to Claim 1, **characterized in that**, upon detection of seizure of the pump in closed-loop mode, the GMP computer switches over the pump speed regulation to open-loop mode for a calibrated period.

3. Method for controlling the start-up of an oil pump (3) according to Claim 2, **characterized in that** the open-loop mode pump control sequence comprises a sequence of oscillations of the rotor (R).

4. Method for controlling the start-up of an oil pump (3) according to Claim 2 or 3, **characterized in that**, at the end of the calibrated period, the GMP computer sends a speed setpoint to the pump corresponding to closed-loop mode operation.

5. Method for controlling the start-up of an oil pump (3) according to Claim 4, **characterized in that** the GMP computer resends the open-loop mode control setpoint each time the seizure detection threshold is exceeded in closed-loop mode.

6. Method for controlling the start-up of an oil pump (3) according to Claim 4 or 5, **characterized in that** the control of the current remains in closed-loop mode on the setpoint corresponding to the lubrication flow rate necessary to ensure the reliability of the gearbox (1), if the temperature of the oil has increased sufficiently for this setpoint to remain under the seizure detection threshold in closed-loop mode.
